# EUROPÄISCHE PATENTSCHRIFT

(11) **EP 3 976 361 B1**
(45) Veröffentlichungstag und Bekanntmachung des Hinweises auf die Patenterteilung: **13.09.2023**
(21) Anmeldenummer: 20721563.3
(22) Anmeldetag: 24.04.2020
(51) Int. Cl.: B29C 73/16

(54) **VERTEILERVORRICHTUNG ZUM EINBRINGEN VON DRUCKLUFT UND/ODER DICHTMITTEL IN EINEN FAHRZEUGLUFTREIFEN SOWIE VERWENDUNG EINER ABDECKEINHEIT DER VERTEILERVORRICHTUNG UND EIN VERFAHREN ZUM EINBRINGEN VON DRUCKLUFT UND/ODER DICHTMITTEL IN EINEN FAHRZEUGLUFTREIFEN**
DISTRIBUTOR DEVICE FOR INTRODUCING COMPRESSED AIR AND/OR SEALANT INTO A PNEUMATIC VEHICLE TYRE, AND USE OF A COVER UNIT OF THE DISTRIBUTOR DEVICE, AND A METHOD FOR INTRODUCING COMPRESSED AIR AND/OR SEALANT INTO A PNEUMATIC VEHICLE TYRE
DISPOSITIF DE DISTRIBUTION POUR L'INTRODUCTION D'AIR COMPRIMÉ ET/OU D'AGENT D'ÉTANCHÉITÉ DANS UN PNEUMATIQUE DE VÉHICULE AINSI QU'UTILISATION D'UNE UNITÉ DE RECOUVREMENT DU DISPOSITIF DE DISTRIBUTION ET UN PROCÉDÉ POUR L'INTRODUCTION D'AIR COMPRIMÉ ET/OU D'AGENT D'ÉTANCHÉITÉ DANS UN PNEUMATIQUE DE VÉHICULE

(30) Priorität: 28.05.2019 DE 102019207775
(43) Veröffentlichungstag der Anmeldung: 06.04.2022
(73) Patentinhaber: Continental Reifen Deutschland GmbH, 30165 Hannover (DE)
(72) Erfinder: SCHLOSSER, Florian - c/o Continental AG, 30419 Hannover (DE)
(74) Vertreter: Continental Corporation
(86) Internationale Anmeldenummer: PCT/EP2020/061461
(87) Internationale Veröffentlichungsnummer: WO 2020/239340

(56) Entgegenhaltungen:
- DE-A1-102015 224 147
- DE-U1- 20 212 101
- US-A1- 2004 159 365
- US-A1- 2014 209 208

## Beschreibung

Die Erfindung betrifft eine Verteilervorrichtung zum Einbringen von Druckluft und/oder Dichtmittel in einen Fahrzeugluftreifen. Die Erfindung betrifft auch die Verwendung einer Abdeckeinheit der Verteilervorrichtung und ein Verfahren zum Einbringen von Druckluft und/oder Dichtmittel in einen Fahrzeugluftreifen.

Kompressoreinheiten zur Luftverdichtung innerhalb tragbarer Systeme, wie beispielsweise in Pannen-Reparaturkits für Pkws, müssen insbesondere zwei Voraussetzungen erfüllen. Einerseits müssen sie sehr kompakt sein, damit sie einen möglichst geringen Platz und ein möglichst geringes Gewicht im Auto einnehmen, beispielsweise Kofferraum. Andererseits müssen sie eine möglichst einfach für einen Anwender handhabbar sein, d.h. über einen langen Zeitraum einsetzbar sein. Zu letzterem gehört nicht nur eine einfache Bedienung, damit das Reparatur-Kit richtig angewandt wird, sondern insbesondere auch eine sichere Bedienweise, um den Anwender vor Gefahren zu schützen.

Zur Erleichterung der Handhabung der Geräte/Reparatursätze offenbart die EP 1914062 A1 einen Reparatursatz zum Abdichten und Aufpumpen aufblasbarer Gegenstände, der mindestens ein Befestigungsmittel aufweist, mit dessen Hilfe die Einrichtung im Betriebszustand an einem Fahrzeug temporär befestigbar ist. Damit erhält man eine Verbindung zwischen den wichtigsten Bauteilen/Zubehörteilen, so dass alle Zubehörteile des Pannenhilfesets sich beim Einsatz zusammen und am richtigen Platz befinden.

EP 1121324 B2 offenbart hierzu eine "Entnahmeeinheit mit einem ein Abdichtmittel enthaltenden Behälter für eine Vorrichtung zum Abdichten aufblasbarer Gegenstände, [...] [wobei] die Entnahmeeinheit auf ihrer im verbundenen Zustand vom Behälter abgewandten Seite mit einer Standfläche versehen ist" (s. Anspruch 1).

Die DE 20212101 U1 offenbart eine Vorrichtung zum Aufpumpen und/oder Abdichten aufblasbarer Gegenstände, insbesondere Luftreifen, die folgende Bestandteile enthält: eine Gasdruckquelle und einen Adapter mit einem an die Gasdruckquelle angeschlossenen Gaseinlass und einem an einen abzudichtenden Gegenstand anschließbaren Gasauslass, wobei der Adapter eine Anschlusseinheit aufweist, an die ein Dichtmittel enthaltender Behälter derartig anschließbar ist, dass der Gaseinlass und der Gasauslass über den Behälterinnenraum miteinander in Verbindung stehen.

Die DE 102015224147 A1 beschreibt eine Vorrichtung zum Abdichten und Aufpumpen von Kraftfahrzeugreifen, wobei die Vorrichtung in einem Gehäuse einen durch einen Motor, vorzugsweise einen Elektromotor angetriebenen Kompressor zur Erzeugung des Abdicht- bzw. Pumpdrucks aufweist sowie einen Anschluss für einen Dichtmittelbehälter, eine Ventil- und Verteilereinheit für Dichtmittel und Druckgas, weiterhin Verbindungsmittel aufweist, wie Schläuche und Leitungen sowie Schalt-, Steuer- und Anzeigeeinrichtungen für den Betrieb der Vorrichtung, wobei die Vorrichtung außerdem ein manuell betätigbares Druckablassventil zur Verringerung des Reifendrucks beinhaltet, wobei das Druckablassventil so ausgebildet ist, dass bei angeschlossenem Dichtmittelbehälter und/oder während der Förderung von Dichtmittel aus dem Dichtmittelbehälter in den Reifen eine Betätigung bzw. ein Ablassen des Drucks verhindert ist.

Die US 2004159365 A1 offenbart eine Verteilervorrichtung gemäß dem Oberbegriff des Anspruchs 1. Die Druckschrift betrifft ein Reifenreparaturgerät mit einem Luftkompressor. Wenn der Luftkompressor aktiviert wird und ein Behälter mit Reifendichtmittel in einem Behälter oder Anschluss aufgenommen oder daran befestigt wird, wird Luft aus dem Luftkompressor in den Behälter gedrückt und drückt Reifendichtmittel aus dem Behälter in den Luftströmungspfad und in einen Reifen.

Die US 2014209208 A1 beschreibt umfasst einen Kompressor und eine Flascheneinheit mit einer Extraktionskappe, die an einem Mündungsabschnitt eines Flaschenbehälters angebracht ist, um darin eine Pannenreparaturflüssigkeit aufzubewahren. Die vorliegende Erfindung bezieht sich auf ein Reparaturset für Reifenlöcher, um nacheinander die Flüssigkeit zur Reparatur von Löchern und Druckluft in einen durchstochenen Reifen einzufüllen, um das Loch vorübergehend zu reparieren.

Eine primäre Aufgabe, die der Erfindung zugrunde liegt, besteht darin, die Verteilereinheit eines Pannen-Reparaturkits so zu gestalten, dass die Bedienung des Pannen-Reparaturkits für einen Anwender einfacher und/oder sicherer ist.

Gelöst wird diese Aufgabe erfindungsgemäß durch eine Verteilervorrichtung zum Einbringen von Druckluft und/oder Dichtmittel in einen Fahrzeugluftreifen, wobei die Verteilervorrichtung
- mindestens einen Gasanschluss zum Anschließen an mindestens eine Druckluftquelle,
- mindestens einen Dichtmittelanschluss zum Anschließen an mindestens einen Dichtmittelbehälter
   und
- mindestens zwei Kanäle, wobei ein Kanal ein Dichtmitteltransportkanal zum Transportieren von Druckluft und/oder Dichtmittel in einen Fahrzeugluftreifen und ein zweiter Kanal ein Drucklufttransportkanal zum Transportieren von Druckluft zum Dichtmittelanschluss oder zum ersten Kanal ist,
aufweist,
dadurch gekennzeichnet, dass
an dem Dichtmittelanschluss eine mindestens eine Innenwand aufweisende Abdeckeinheit zum Verschließen des Dichtmittelanschlusses angebracht ist und das verteilerseitige Ende des Drucklufttransportkanals so angeordnet ist, dass von dem Gasanschluss kommende Druckluft in Richtung Innenwand der Abdeckeinheit geleitet wird.

Überraschenderweise wurde herausgefunden, dass die Bedienung eines Reifen-Reparaturkits dann besonders einfach für den Anwender ist, wenn die Verteilervorrichtung eines Reifen-Reparaturkits lediglich einen Einlasskanal wie beispielsweise einen Drucklufttransportkanal und einen Ausgangskanal wie beispielsweise einen Dichtmitteltransportkanäle wie eine erfindungsgemäße Verteilervorrichtung aufweist. Auf diese Weise muss der Anwender keinen für die Bedienung umständlichen Bedienungsschritt zum Umstellen von einem Druckluftmodus in einen Dichtmittelmodus ausführen, um die Strömung der Druckluft einmal direkt in den Fahrzeugluftreifen und einmal durch den Dichtmittelbehälter am Dichtmittelanschluss zuführen. Im Stand der Technik wird dies häufig durch eine Drehbewegung durchgeführt, welche bei einer zu geringen oder zu weiten Drehbewegung zu einer fehlerhaften Bedienung des Reifen-Reparaturkits führen kann, vgl. beispielsweise das Dokument JP3180503 U. Ein solcher Umschaltmechanismus erfordert jedoch mehr als zwei Kanäle in der Verteilervorrichtung und wie vorstehend beschrieben einen zusätzlichen Bedienungsschritt. Es ist daher eine große Leistung der vorliegenden Erfindung herausgefunden haben, dass, wenn der Druckluft das verteilerseitige Ende des Drucklufttransportkanals in Richtung einer Abdeckeinheit zeigt, die Abdeckeinheit zum Umleiten der Druckluft in den Dichtmitteltransportkanal verwendet und anschließend durch einen Dichtmittelbehälter, welche an den Dichtmittelanschluss angebracht werden kann, ersetzt wird. Durch das vorstehend beschriebene Ersetzen der Abdeckeinheit einer erfindungsmäßen Verteilervorrichtung durch den Dichtmittelbehälter wird daher mittels einer erfindungsmäßen Verteilervorrichtung auf anwenderfreundliche Weise ein Umstellen von dem besagten Druckluftmodus zu dem Dichtmittel Modus ermöglicht. Zusätzlich weist eine erfindungsgemäße Verteilervorrichtung wie vorstehend beschrieben einen vereinfachten Aufbau aus uns daher einfach herzustellen.

Im Rahmen der vorliegenden Erfindung hat der Drucklufttransportkanal einer erfindungsgemäßen Verteilervorrichtung mindestens zwei Enden, ein kompressorseitiges Ende und ein verteilerseitiges Ende, wobei der Drucklufttransportkanal so ausgestaltet ist, dass er durch die Öffnung am kompressorseitigen Ende Druckluft vom einem Kompressor als ein Beispiel einer Druckluftquelle aufnehmen kann und anschließend innerhalb der Kanalummantelung des Drucklufttransportkanals die Druckluft hin zum verteilerseitige Ende des Drucklufttransportkanals leiten kann. Das verteilerseitige Ende des Drucklufttransportkanals ist so angeordnet ist, dass von dem Gasanschluss kommende Druckluft in Richtung Innenwand der Abdeckeinheit geleitet wird, sodass es die Abdeckvorrichtung mittels der aus dem Drucklufttransportkanal kommenden Druckluft erwärmen kann. Der Abstand zwischen dem verteilerseitigen Ende des Drucklufttransportkanals und der Innenwand der Abdeckeinheit sollte erfindungsgemäß bevorzugt zwischen 0,1 bis 10 cm liegen.

Im Rahmen der vorliegenden Erfindung hat der Dichtmitteltransportkanal einer erfindungsgemäßen Verteilervorrichtung mindestens zwei Enden, ein reifenseitiges Ende und ein verteilerseitiges Ende, wobei der Dichtmitteltransportkanal so ausgestaltet ist, dass er durch die Öffnung am verteilerseitigen Ende sowohl Druckluft als auch eine Dispersion aus Druckluft und Dichtmittel aufnehmen kann und anschließend innerhalb der Kanalummantelung des Dichtmitteltransportkanals die Druckluft hin zum reifenseitigen Ende des Dichtmitteltransportkanals und somit in einen Fahrzeugluftreifen leiten kann.

Im Rahmen der vorliegenden Erfindung werden die Ausdrücke "Vorrichtung" und "Verteilervorrichtung" synonym verwendet. Eine erfindungsgemäße Verteilervorrichtung wird bevorzugt zum Einbringen von Druckluft und/oder Dichtmittel in einen Fahrzeugluftreifen verwendet und ist Teil eines erfindungsgemäßen Reifen-Reparaturkits zum Abdichten von Fahrzeugluftreifen. Dies stellt eine erfindungsgemäße Verwendung der Verteilervorrichtung dar.

Bevorzugt ist eine erfindungsgemäße Vorrichtung wie vorstehend beschrieben oder wie vorstehend als bevorzugt beschrieben, wobei genau zwei Kanäle, wobei erste Kanal ein Dichtmitteltransportkanal zum Transportieren von Druckluft und/oder Dichtmittel in einen Fahrzeugluftreifen und der zweite Kanal ein Drucklufttransportkanal zum Transportieren von Druckluft zum Dichtmittelanschluss oder zum ersten Kanal ist.

Besonders bevorzugt ist eine erfindungsgemäße Vorrichtung wie vorstehend beschrieben oder wie vorstehend als bevorzugt beschrieben, wobei die Verteilervorrichtung eine Schneideinheit zum Zerschneiden einer Aluminiumfolie an einem Dichtmittelbehälter aufweist, wobei die Schneideeinheit bevorzugt aus einem Metall besteht und besonders bevorzugt so in der Verteilervorrichtung angebracht ist, dass beim Anschrauben eines mit einer Aluminiumfolie versiegelten Dichtmittelbehälters in das Innengewinde des Dichtmittelanschlusses die besagte Aluminiumfolie zerschnitten wird.

Ein Vorteil des vorstehend beschriebenen Aspekts der vorliegenden Erfindung ist, dass die Schneidevorrichtung aufgrund ihrer Anordnung zu den beiden Kanäle, das heißt des Dichtmitteltransportkanals und des Drucklufttransportkanals, in einer erfindungsgemäßen Vorrichtung direkt beim Anschreiben eines Dichtmittelbehälters an dem Dichtmittelanschluss den Dichtmittel Modus eines Reifen-Auto Tipps auflöst, d.h. Dichtmittel in den Druckluftstrom aus dem Kompressor und somit Dichtmittel in den Fahrzeugluftreifen mit dem abzudichtenden Loch befördert.

Besonders bevorzugt ist eine erfindungsgemäße Vorrichtung wie vorstehend beschrieben oder wie vorstehend als bevorzugt beschrieben, wobei der Dichtmittelanschluss ein Innengewinde aufweist und die Abdeckeinheit ein zu dem Innengewinde passendes Außengewinde aufweist, wobei die Abdeckeinheit mittels ihres Außengewindes an den Dichtmittelanschluss mit dem Innengewinde angebracht ist.

Besonders bevorzugt ist es, wenn der Dichtmittelanschluss eine Aussparung zum Einrasten eines Dichtmittelbehälters aufweist, wobei die Aussparung so ausgestaltet ist, dass das Einrasten dann geschieht, wenn der Dichtmittelbehälter in der für die Bedienung vorgesehene Position aufweist. Ein Beispiel einer solchen Einrasten Funktion ist beispielsweise ein Bajonettverschluss.

Ein Vorteil des vorstehend beschriebenen Aspekts der vorliegenden Erfindung ist, dass vorstehend beschriebene Verschlussarten einfacher zu handhaben sind im Vergleich zu Anschlüssen ohne Innengewinde und/oder einer vorstehend beschriebenen Einrastfunktion oder Bajonettverschluss.

Bevorzugt ist auch eine erfindungsgemäße Vorrichtung wie vorstehend beschrieben oder wie vorstehend als bevorzugt beschrieben, wobei die Abdeckeinheit dazu eingerichtet ist, aus dem Drucklufttransportkanals kommende Druckluft zumindest teilweise, bevorzugt vollständig, in den Dichtmitteltransportkanal umzuleiten.

Besonders bevorzugt ist auch eine erfindungsgemäße Vorrichtung wie vorstehend beschrieben oder wie vorstehend als bevorzugt beschrieben oder wie vorstehend als besonders bevorzugt beschrieben, wobei die Abdeckeinheit zum hermetischen Verschließen des Dichtmittelanschlusses geeignet ist und/oder aus einem Verbundmaterial besteht, wobei das Verbundmaterial Verbindungen eine Polymermatrix ausgesucht aus der Gruppe bestehend aus Duroplasten wie Polyamid, Teflon, Polyethylenterephthalat und einem Festigkeitsträger wie Glasfaser, Metallfasern umfasst.

Ein Vorteil des vorstehend beschriebenen Aspekts der vorliegenden Erfindung ist, dass eine Abdeckeinheit einer erfindungsgemäßen Vorrichtung die aus dem Drucklufttransportkanal kommende Druckluft aufgefangen und daher sowohl einer gewissen Temperaturerhöhung als auch einem gewissen Druck standhalten muss. Die vorstehend beschriebenen Verbundmaterialien eignen sich hierzu besonders gut.

Die Verwendung eines solchen Verbundmaterials für eine Abdeckeinheit einer erfindungsgemäßen Verteilervorrichtung hat jedoch den Nachteil, dass sich die Abdeckeinheit so stark erhitzen kann, dass sie Verbrennungen und/oder Schmerzen bei dem Anwender auslösen kann man welcher die Abdeckeinheit herausnimmt. Überraschenderweise wurde im Rahmen der vorliegenden Erfindung auch herausgefunden, dass das vorstehend beschriebene Problem durch den nachfolgend beschriebenen Aspekt der vorliegenden Erfindung gelöst werden kann.

Erfindungsgemäß ist eine Vorrichtung wie vorstehend beschrieben oder wie vorstehend als bevorzugt beschrieben, wobei die Verteilervorrichtung zwischen der Innenwand der Abdeckeinheit und dem besagten verteilerseitige Ende des Drucklufttransportkanals ein Material zur Wärmeisolation der Abdeckeinheit aufweist.

Ein Vorteil des vorstehend beschriebenen Aspekts der vorliegenden Erfindung ist, dass wie vorstehend beschrieben durch den einfachen Aufbau der zwei Kanäle, d.h. des Dichtmitteltransportkanals und des Drucklufttransportkanals, die Abdeckeinheit einer erfindungsmäßen Verteilervorrichtung sich erhitzen kann, und daher aus einem kompliziert herzustellenden und teuren Verbundmaterial wie vorstehend beschrieben hergestellt werden muss. Das vorstehend beschriebene Material zur Wärmeisolation der Abdeckeinheit vermeidet daher das Erhitzen der Abdeckeinheit. Mögliche Beispiele für so ein Material zur Wärmeisolation der Abdeckeinheit einer erfindungsmäßen Verteilervorrichtung sind Materialien im festen Aggregatszustand bei 20 °C mit einer Wärmeleitfähigkeit bei 0 °C, welche kleiner ist als die Wärmeleitfähigkeit bei 0 °C der anderen Materialien, aus welchen die Abdeckeinheit einer erfindungsgemäßen Verteilervorrichtung besteht.

Das Material zur Wärmeisolation der Abdeckeinheit kann im Rahmen der vorigen Erfindung entweder direkt an der Innenwand der Abdeckeinheit Anliegen, beispielsweise als Beschichtung, oder auch einen Abstand zu der Innenwand der Abdeckeinheit und somit eine Isolationskammer wie nachstehend beschrieben aufweisen Durch den Einsatz des vorstehend beschriebenen Materials zur Wärmeisolation der Abdeckeinheit können als andere Materialien, aus welchen die Abdeckeinheit einer erfindungsgemäßen Verteilervorrichtung besteht, beispielsweise umweltschonendere Materialien eingesetzt werden, wie beispielsweise recyclebares Polypropylen und recyclebares Acrylnitril-Butadien-Styrol-Copolymer nach ISO-Norm ISO 472:2013 (de).

Erfindungsgemäß ist eine erfindungsgemäße Vorrichtung wie vorstehend beschrieben oder wie vorstehend als bevorzugt beschrieben, wobei das Material zur Wärmeisolation der Abdeckeinheit als eine Wärmeisolationslage ausgebildet ist und dazu eingerichtet ist, aus dem Drucklufttransportkanals kommende Druckluft zumindest teilweise, bevorzugt vollständig, in den Dichtmitteltransportkanal umzuleiten.

Ein Vorteil des vorstehend beschriebenen Aspekts der vorliegenden Erfindung ist, dass eine wie vorstehend beschrieben ausgebildete Abdeckeinheit einer erfindungsgemäßen Verteilervorrichtung einen Großteil der Fläche der Innenwand der Abdeckeinheit Richtung abdeckt und somit eine erhitzen der Abdeckeinheit größtenteils verhindert.

Besonders bevorzugt ist auch eine erfindungsgemäße Vorrichtung wie vorstehend beschrieben oder wie vorstehend als bevorzugt beschrieben oder wie vorstehend als besonders bevorzugt beschrieben, wobei das Material zur Wärmeisolation oder die Wärmeisolationslage mit der Abdeckeinheit verbunden ist, bevorzugt formschlüssig oder stoffschlüssig verbunden ist, besonders bevorzugt formschlüssig so verbunden ist, dass eine Isolationskammer zwischen dem Material und der Innenwand der Abdeckeinheit entsteht, wobei die Isolationskammer ausschließlich mit Luft gefüllt ist. Eine geeignete formschlüssig Verbindung ist beispielsweise ein Verkleben oder Verschmelzen des Materials der Abdeckeinheit und des Materials zur Wärmeisolation der Abdeckeinheit. Eine vorstehend beschriebene Isolationskammer ist bevorzugt hermetisch verschlossen und weist bevorzugt einen Unterdruck auf um eine möglichst gute Wärmeisolation herbeizuführen, wobei das Material zur Wärmeisolation der Abdeckeinheit ausreichend stabil ist, um den Unterdruck standzuhalten.

Ein Vorteil des vorstehend beschriebenen Aspekts der vorliegenden Erfindung ist, dass eine noch bessere Wärmeisolation im Vergleich zu Abdeckeinheit ohne Isolationskammer gewährleistet wird.

Bevorzugt ist eine erfindungsgemäße Vorrichtung wie vorstehend beschrieben oder wie vorstehend als bevorzugt beschrieben, wobei die Vorrichtung ein Verbindungsstück zur Verbindung zwischen dem Dichtmitteltransportkanal und einem Reifenventil eines Fahrzeugluftreifens sowie optional weitere Verbindungselemente zur Verbindung mit weiteren Einheiten eines Reifen-Reparaturkits umfasst.

Bevorzugt ist eine erfindungsgemäße Vorrichtung wie vorstehend beschrieben oder wie vorstehend als bevorzugt beschrieben, wobei zwischen der einen Innenwand der Abdeckeinheit und dem Material zur Wärmeisolation der Abdeckeinheit zumindest bereichsweise, bevorzugt entlang der gesamten Fläche der Innenwand der Abdeckeinheit, ein Abstand im Bereich von 0,1 bis 100 mm vorliegt, bevorzugt im Bereich von 0,5 bis 10 mm, besonders bevorzugt im Bereich von 1 bis 5 mm. Die vorstehend beschriebenen Bereichsangaben für den Abstand zwischen der einen Innenwand der Abdeckeinheit und dem Material zur Wärmeisolation der Abdeckeinheit entsprechen der sich senkrecht zur Außenfläche der Innenwand der Abdeckeinheit erstreckende Höhe einer vorstehend beschriebenen Isolationskammer.

Im Rahmen der vorliegenden Erfindung erstreckt sich die Wärmeisolationslage bzw. das Material zur Wärmeisolation der Abdeckeinheit zumindest bereichsweise parallel zur Außenfläche der Innenwand der Abdeckeinheit. Im Rahmen der vorliegenden Erfindung bedeutet der Ausdruck "bereichsweise", dass ein Teil einer ersten Fläche parallel zu einer zweiten Fläche wie beispielsweise der vorstehend beschriebenen Außenfläche der Innenwand der Abdeckeinheit verläuft.

Bevorzugt ist eine erfindungsgemäße Vorrichtung wie vorstehend beschrieben oder wie vorstehend als bevorzugt beschrieben, wobei das Material zur Wärmeisolation als Beschichtung auf der Innenwand der Abdeckeinheit vorliegt.

Ein Vorteil des vorstehend beschriebenen Aspekts der vorliegenden Erfindung ist, dass eine vorstehend beschriebene erfindungsgemäße Vorrichtung Platz sparender ist als Vorrichtungen, bei denen das Material zur Wärmeisolation der Abdeckeinheit nicht als Beschichtung ausgebildet ist.

Bevorzugt ist eine erfindungsgemäße Vorrichtung wie vorstehend beschrieben oder wie vorstehend als bevorzugt beschrieben, wobei das Material zur Wärmeisolation der Abdeckeinheit ein Material ist ausgesucht aus der folgenden Gruppe oder die Abdeckeinheit aus einem Material besteht ausgesucht aus der folgenden Gruppe:
Holz, einem oder mehreren weiteren Duroplasten, Kautschuk, Keramiken, Schaumstoffen,
wobei das Material bevorzugt ausgesucht ist aus der folgenden Gruppe aus Holz, Kautschuk, Keramiken, Schaumstoffen.

Ein Vorteil des vorstehend beschriebenen Aspekts der vorliegenden Erfindung ist, dass die vorstehend beschriebenen spezifischen Materialien, insbesondere Kautschuk, Keramiken, Schaumstoffen mit Wärmeleitfähigkeiten bei 0°C im Bereich von0,15 bis 0,4 W/(m·K), eine besonders gute Wärmeisolation der Abdeckeinheit im Vergleich zu anderen Materialien bewirken. Ganz besonders vorteilhaft sind Materialien mit einer Wärmeleitfähigkeit bei 0°C von kleiner als 0,04 W/(m·K) wie beispielsweise Luft 0,026 W/(m·K) oder ein Unterdruck von 10⁻⁶ bar mit 0,004 W/(m·K) .

Der besagte eine oder die besagten weiteren Duroplasten unterscheidet bzw. unterschieden sich bevorzugt von dem oder den Duroplasten, welcher oder welche als restliche oder andere vorstehend beschriebenen Materialien der Abdeckeinheit verwendet werden. Geeignete Beispiele für Keramiken sind Silikate und Metalloxid-Keramiken und oxidische Keramiken wie Siliziumcarbid. Geeignete Beispiele für Schaumstoffe sind Schäume bestehend aus Polystyrol, Polyether, Polyester, Polyurethan oder einer Mischung dieser Polymere. Geeignete Beispiele für Kautschuke sind:
- natürlichem Polyisopren,
- synthetischem Polyisopren,
- epoxidiertem Polyisopren,
- Butadien-Kautschuk,
- Butadien-Isopren-Kautschuk,
- lösungspolymerisiertem Styrol-Butadien-Kautschuk,
- emulsionspolymerisiertem Styrol-Butadien-Kautschuk,
- Styrol-Isopren-Kautschuk,
- Halobutyl-Kautschuk,
- Polynorbornen,
- Isopren-Isobutylen-Copolymer,
- Ethylen-Propylen-Dien-Kautschuk,
- Nitril-Kautschuk,
- Chloropren-Kautschuk,
- Acrylat-Kautschuk,
- Fluor-Kautschuk,
- Silikon-Kautschuk,
- Polysulfid-Kautschuk,
- Epichlorhydrin-Kautschuk,
- Styrol-Isopren-Butadien-Terpolymer,
- hydriertem Acrylnitrilbutadien-Kautschuk
   und
- hydriertem Styrol-Butadien-Kautschuk.

Die vorstehend beschriebenen vorteilhaften Aspekte einer erfindungsgemäßen Verteilervorrichtung zum Einbringen von Druckluft und/oder Dichtmittel in einen Fahrzeugluftreifen gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Verteilervorrichtung zum Einbringen von Druckluft und/oder Dichtmittel in einen Fahrzeugluftreifen.

Die Erfindung betrifft auch eine Verwendung einer Abdeckeinheit wie vorstehend beschrieben oder wie vorstehend als bevorzugt beschrieben zum Umleiten eines Druckluftstromes aus einem Drucklufttransportkanal in einen Dichtmitteltransportkanal und/oder einer Abdeckeinheit umfassend ein Material zur Wärmeisolation wie vorstehend beschrieben oder wie vorstehend als bevorzugt beschrieben zur Wärmeisolation.

Die vorstehend beschriebenen vorteilhaften Aspekte einer erfindungsgemäßen Verteilervorrichtung zum Einbringen von Druckluft und/oder Dichtmittel in einen Fahrzeugluftreifen und einer erfindungsgemäßen Verwendung gelten auch für sämtliche Aspekte einer nachstehend beschriebenen Verfahren und die nachstehend diskutierten vorteilhaften Aspekte erfindungsgemäßer Verfahren gelten entsprechend für sämtliche Aspekte einer erfindungsgemäßen Verteilervorrichtung zum Einbringen von Druckluft und/oder Dichtmittel in einen Fahrzeugluftreifen und einer erfindungsgemäßen Verwendung.

Die Erfindung betrifft auch ein Verfahren zum Einbringen von Druckluft und/oder Dichtmittel in einen Fahrzeugluftreifen, umfassend die folgenden Schritte:
A) Bereitstellen eines Reifen-Reparaturkits mit einem Kompressor und einer erfindungsgemäßen Verteilervorrichtung wie vorstehend beschrieben oder wie vorstehend als bevorzugt beschrieben oder wie vorstehend als besonders bevorzugt beschrieben, und eines Fahrzeugluftreifens mit einer Panne zum Einsatz des Reifen-Reparaturkits,
B) Verbinden eines Dichtmitteltransportkanals (4) mit dem Fahrzeugluftreifen mit der Panne,
C) Verwendung des Reifen-Reparaturkits zum Erhöhen des Reifeninnendrucks des Fahrzeugluftreifens mit der Panne bis auf einen Mindestdruck, bevorzugt auf mindestens 1 bar, wobei Druckluft aus dem Kompressor in den Fahrzeugluftreifen gepumpt wird,
D) Unterbrechen der Verbindung zwischen dem Fahrzeugluftreifen mit erhöhtem Reifeninnendruck und dem Dichtmitteltransportkanal,
E) Entfernen der Abdeckeinheit von der Verteilervorrichtung und Anbringen eines Dichtmittelbehälters mit Dichtmittel an der Verteilervorrichtung ohne die entfernte Abdeckeinheit,
F) Verbinden des Fahrzeugluftreifens mit erhöhtem Reifeninnendruck und dem Dichtmitteltransportkanal und Befördern von Dichtmittel aus dem Dichtmittelbehälter mittels der Druckluft aus dem Kompressor in den Fahrzeugluftreifen,
G) Abdichten der Panne am Fahrzeugluftreifen mittels des in den Fahrzeugluftreifen beförderten Dichtmittels.

Bevorzugt ist ein Verfahren wie vorstehend beschrieben, wobei der Schritt D) mittels Entfernen des Dichtmitteltransportkanals vom Reifenventil des Fahrzeugluftreifens oder mittels eines Ventils am Dichtmitteltransportkanal oder an einem Verbindungsstück einer erfindungsgemäßen Verteilervorrichtung wie vorstehend beschrieben oder wie vorstehend als bevorzugt beschrieben oder wie vorstehend als besonders bevorzugt beschrieben durchgeführt wird, wobei das Verbindungsstück zur Verbindung zwischen Dichtmitteltransportkanal und Reifenventil geeignet ist.

### Figurenbeschreibung:

Es zeigt:

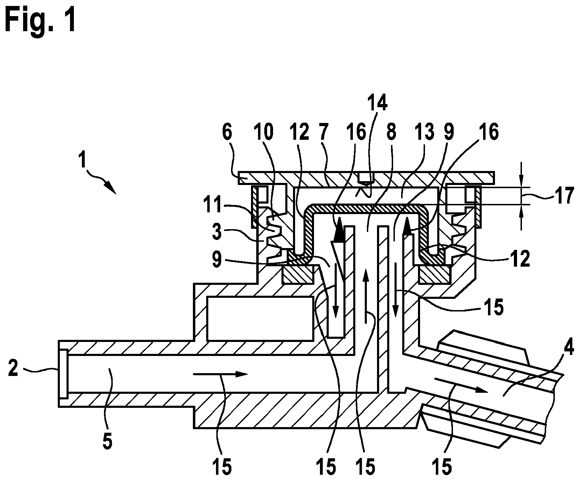

- Figur 1:: Querschnitt einer schematisch dargestellten erfindungsgemäßen Verteilervorrichtung.

Figur 1 zeigt eine schematische Darstellung eines Querschnitts einer Verteilervorrichtung 1 zum Einbringen von Druckluft und/oder Dichtmittel in einen Fahrzeugluftreifen, wobei die Verteilervorrichtung 1 einen Gasanschluss 2 zum Anschließen an eine Druckluftquelle, einen Dichtmittelanschluss 3 zum Anschließen an einen Dichtmittelbehälter und mindestens zwei Kanäle 4, 5, wobei ein Kanal ein Dichtmitteltransportkanal 4 zum Transportieren von Druckluft und/oder Dichtmittel in einen Fahrzeugluftreifen und ein zweiter Kanal ein Drucklufttransportkanal 5 zum Transportieren von Druckluft zum Dichtmittelanschluss oder zum ersten Kanal ist, aufweist, dadurch gekennzeichnet, dass an dem Dichtmittelanschluss 3 eine eine Innenwand 7 aufweisende Abdeckeinheit 6 zum Verschließen des Dichtmittelanschlusses 3 angebracht ist und das verteilerseitige Ende 8 des Drucklufttransportkanals 4 so angeordnet ist, dass von dem Gasanschluss 2 kommende Druckluft in Richtung Innenwand 7 der Abdeckeinheit 6 geleitet wird.

Gezeigt ist in Figur 1 auch eine Isolationskammer 13, welche zwischen der Wärmeisolationslage 12 und der Außenfläche 14 der Innenwand 7 der Abdeckeinheit 6 angeordnet ist und eine Höhe 17 aufweist. Die Isolationskammer 13 führt zu einer zusätzlichen Wärmeisolation, sodass die Abdeckeinheit 6 weniger stark von aus dem Drucklufttransportkanal 5 in Strömungsrichtung 15 strömender Druckluft erhitzt wird, welche auf die stoffschlüssig mit der Abdeckeinheit 6 verbundene Isolationslage 12 der Abdeckeinheit 6 der Verteilervorrichtung 1 trifft. Die Abdeckeinheit 6 einer erfindungsgemäßen Verteilervorrichtung 1 ist wie in Figur 1 gezeigt mittels eines Außengewindes 11 in ein in der Verteilervorrichtung 1 befindliches Innengewinde 10 hineingeschraubt. Zusätzlich umfasst die erfindungsgemäße Verteilervorrichtung 1 auch wie in Figur 1 gezeigt eine Schneideinheit 16 zum Zerschneiden einer Aluminiumfolie an einem Dichtmittelbehälter, wobei die Schneideeinheit aus einem Metall besteht und so in der Verteilervorrichtung 1 angebracht ist, dass beim Anschrauben eines mit einer Aluminiumfolie versiegelten Dichtmittelbehälters in das Innengewinde 10 des Dichtmittelanschlusses 3 die besagte Aluminiumfolie zerschnitten wird. Das verteilerseitige Ende 9 des Dichtmitteltransportkanals 4 ist wie in Figur 1 angedeutet radialsymmetrisch ausgebildet, wobei das verteilerseitige Ende 9 des Dichtmitteltransportkanals 4 zumindest teilweise zylindrisch ausgebildet ist und ebenfalls zumindest teilweise um das verteilerseitige Ende 8 des Drucklufttransportkanals 5 verläuft.

### Bezugszeichenliste:

- 1: Verteilervorrichtung
- 2: Gasanschluss zum Anschließen an mindestens eine Druckluftquelle
- 3: Dichtmittelanschluss zum Anschließen an mindestens einen Dichtmittelbehälter
- 4: Dichtmitteltransportkanal; erster Kanal
- 5: Drucklufttransportkanal; zweiter Kanal
- 6: Abdeckeinheit zum Verschließen des Dichtmittelanschlusses
- 7: Innenwand der Abdeckeinheit
- 8: verteilerseitige Ende des Drucklufttransportkanals
- 9: verteilerseitige Ende des Dichtmitteltransportkanal
- 10: Innengewinde des Dichtmittelanschlusses
- 11: Außengewinde der Abdeckeinheit
- 12: Wärmeisolationslage, im festen Aggregatzustand befindliches Material zur Wärmeisolation der Abdeckeinheit
- 13: Isolationskammer zwischen dem Material und der Innenwand der Abdeckeinheit
- 14: Außenfläche der Innenwand der Abdeckeinheit
- 15: Strömungsrichtung
- 16: Schneideinheit zum Zerschneiden einer einen Dichtmittelbehälter versiegelnden Aluminiumfolie
- 17: Höhe der Isolationskammer

## Patentansprüche

1. Verteilervorrichtung zum Einbringen von Druckluft und/oder Dichtmittel in einen Fahrzeugluftreifen, wobei die Verteilervorrichtung (1)
- mindestens einen Gasanschluss (2) zum Anschließen an mindestens eine Druckluftquelle,
- mindestens einen Dichtmittelanschluss (3) zum Anschließen an mindestens einen Dichtmittelbehälter
und
- mindestens zwei Kanäle, wobei ein Kanal ein Dichtmitteltransportkanal (4) zum Transportieren von Druckluft und/oder Dichtmittel in einen Fahrzeugluftreifen und ein zweiter Kanal ein Drucklufttransportkanal (5) zum Transportieren von Druckluft zum Dichtmittelanschluss (3) oder zum ersten Kanal ist,
aufweist,
wobei an dem Dichtmittelanschluss (3) eine mindestens eine Innenwand (7) aufweisende Abdeckeinheit (6) zum Verschließen des Dichtmittelanschlusses (3) angebracht ist und das verteilerseitige Ende (8) des Drucklufttransportkanals (5) so angeordnet ist, dass von dem Gasanschluss (2) kommende Druckluft in Richtung Innenwand (7) der Abdeckeinheit (6) geleitet wird,
wobei die Verteilervorrichtung (1) zwischen der Innenwand (7) der Abdeckeinheit (6) und dem besagten verteilerseitige Ende (8) des Drucklufttransportkanals (5) ein Material (12) zur Wärmeisolation der Abdeckeinheit (6) aufweist,
das Material (12) zur Wärmeisolation der Abdeckeinheit (6) als eine Wärmeisolationslage ausgebildet ist **dadurch gekennzeichnet, dass** das Material zur Wärmeisolation der Abdeckeinheit dazu eingerichtet ist, aus dem Drucklufttransportkanals (5) kommende Druckluft zumindest teilweise in den Dichtmitteltransportkanal (4) umzuleiten.

2. Verteilervorrichtung nach Anspruch 1, wobei der Dichtmittelanschluss (3) ein Innengewinde (10) aufweist und die Abdeckeinheit (6) ein zu dem Innengewinde (10) passendes Außengewinde (11) aufweist, wobei die Abdeckeinheit (6) mittels ihres Außengewindes (11) an den Dichtmittelanschluss (3) mit dem Innengewinde (10) angebracht ist.

3. Verteilervorrichtung nach einem der vorangehenden Ansprüche, wobei die Abdeckeinheit (6) zum hermetischen Verschließen des Dichtmittelanschlusses (3) geeignet ist und/oder aus einem Verbundmaterial besteht, wobei das Verbundmaterial Verbindungen eine Polymermatrix ausgesucht aus der Gruppe bestehend aus Duroplasten wie Polyamid, Teflon, Polyethylenterephthalat und einem Festigkeitsträger wie Glasfaser, Metallfasern umfasst.

4. Verteilervorrichtung nach Anspruch 1, wobei das Material (12) zur Wärmeisolation der Abdeckeinheit (6) als eine Wärmeisolationslage ausgebildet ist und dazu eingerichtet ist, aus dem Drucklufttransportkanals (5) kommende Druckluft vollständig in den Dichtmitteltransportkanal (4) umzuleiten.

5. Verteilervorrichtung nach einem der Ansprüche 1 oder 4, bevorzugt nach Anspruch 4, wobei das Material (12) zur Wärmeisolation der Abdeckeinheit (6) oder die Wärmeisolationslage mit der Abdeckeinheit (6) verbunden ist, bevorzugt formschlüssig oder stoffschlüssig verbunden ist, besonders bevorzugt formschlüssig so verbunden ist, dass eine Isolationskammer (13) zwischen dem Material (12) und der Innenwand (7) der Abdeckeinheit (6) entsteht, wobei die Isolationskammer (13) bevorzugt ausschließlich mit Luft gefüllt ist.

6. Verteilervorrichtung nach einem der Ansprüche 1 oder 4, wobei zwischen der einen Innenwand (7) der Abdeckeinheit (6) und dem Material (12) zur Wärmeisolation der Abdeckeinheit (6) zumindest bereichsweise, bevorzugt entlang der gesamten Außenfläche (14) der Innenwand (7) der Abdeckeinheit (6), ein Abstand im Bereich von 0,1 bis 100 mm vorliegt, bevorzugt im Bereich von 0,5 bis 10 mm, besonders bevorzugt im Bereich von 1 bis 5 mm.

7. Verteilervorrichtung nach einem der Ansprüche 1 oder 4 bis 5, wobei das Material (12) zur Wärmeisolation als Beschichtung auf der Innenwand (7) der Abdeckeinheit (6) vorliegt.

8. Verteilervorrichtung nach einem der vorangehenden Ansprüche, wobei das Material (12) zur Wärmeisolation der Abdeckeinheit (6) ein Material ist ausgesucht aus der folgenden Gruppe oder die Abdeckeinheit (6) aus einem Material besteht ausgesucht aus der folgenden Gruppe:
Holz, einem oder mehreren weiteren Duroplasten, Kautschuk, Keramiken, Schaumstoffen,
wobei das Material (12) bevorzugt ausgesucht ist aus der Gruppe bestehend aus Holz, Kautschuk, Keramiken, Schaumstoffen.

9. Verfahren zum Einbringen von Druckluft und/oder Dichtmittel in einen Fahrzeugluftreifen, umfassend die folgenden Schritte:
A) Bereitstellen eines Reifen-Reparaturkits mit einem Kompressor und einer Verteilervorrichtung (1) nach einem der vorangehenden Ansprüche, und eines Fahrzeugluftreifens mit einer Panne zum Einsatz des Reifen-Reparaturkits,
B) Verbinden eines Dichtmitteltransportkanals (4) mit dem Fahrzeugluftreifen mit der Panne,
C) Verwendung des Reifen-Reparaturkits zum Erhöhen des Reifeninnendrucks des Fahrzeugluftreifens mit der Panne bis auf einen Mindestdruck, bevorzugt auf mindestens 1 bar, wobei Druckluft aus dem Kompressor in den Fahrzeugluftreifen gepumpt wird,
D) Unterbrechen der Verbindung zwischen dem Fahrzeugluftreifen mit erhöhtem Reifeninnendruck und dem Dichtmitteltransportkanal (4),
E) Entfernen der Abdeckeinheit (6) von der Verteilervorrichtung (1) und Anbringen eines Dichtmittelbehälters mit Dichtmittel an der Verteilervorrichtung (1) ohne die entfernte Abdeckeinheit (6),
F) Verbinden des Fahrzeugluftreifens mit erhöhtem Reifeninnendruck und dem Dichtmitteltransportkanal (4) und Befördern von Dichtmittel aus dem Dichtmittelbehälter mittels der Druckluft aus dem Kompressor in den Fahrzeugluftreifen,
G) Abdichten der Panne am Fahrzeugluftreifen mittels des in den Fahrzeugluftreifen beförderten Dichtmittels.

10. Verwendung einer Abdeckeinheit (6) wie in einem der Ansprüche 1 bis 8 definiert zum Umleiten eines Druckluftstromes aus einem Drucklufttransportkanal (5) in einen Dichtmitteltransportkanal (4) und/oder einer Abdeckeinheit (6) wie in einem der vorangehenden Ansprüche 1 oder 4 bis 8 zur Wärmeisolation.

## Claims

1. Distributor apparatus for introducing compressed air and/or sealant into a pneumatic vehicle tire, wherein the distributor apparatus (1) comprises
- at least one gas connection (2) for connecting to at least one compressed air source,
- at least one sealant connection (3) for connecting to at least one sealant container
and
- at least two channels, wherein one channel is a sealant transport channel (4) for transporting compressed air and/or sealant into a pneumatic vehicle tire and a second channel is a compressed air transport channel (5) for transporting compressed air to the sealant connection (3) or to the first channel,
wherein the sealant connection (3) has a covering unit (6) comprising at least one inner wall (7) for sealing the sealant connection (3) attached to it and the distributor-side end (8) of the compressed air transport channel (5) is arranged such that compressed air coming from the gas connection (2) is conducted in the direction of the inner wall (7) of the covering unit (6),
wherein the distributor apparatus (1) comprises a material (12) for thermal insulation of the covering unit (6) between the inner wall (7) of the covering unit (6) and said distributor-side end (8) of the compressed air transport channel (5) and the material (12) for thermal insulation of the covering unit (6) is in the form of a thermal insulation layer, **characterized in that** the material for thermal insulation of the covering unit is adapted for at least partially diverting compressed air coming from the compressed air transport channel (5) into the compressed air transport channel (4).

2. Distributor apparatus according to Claim 1, wherein the sealant connection (3) has an internal thread (10) and the covering unit (6) has an external thread (11) fitting the internal thread (10), wherein the covering unit (6) is connected to the sealant connection (3) having the internal thread (10) by means of its external thread (11).

3. Distributor apparatus according to any of the preceding claims, wherein the covering unit (6) is suitable for hermetic sealing of the sealant connection (3) and/or consists of a composite material, wherein the composite material comprises compounds of a polymer matrix selected from the group consisting of thermosets such as polyamide, Teflon, polyethylene terephthalate and a strength member such as glass fiber, metal fibers.

4. Distributor apparatus according to Claim 1, wherein the material (12) for thermal insulation of the covering unit (6) is in the form of a thermal insulation layer and is adapted for completely diverting compressed air coming from the compressed air transport channel (5) into the sealant transport channel (4).

5. Distributor apparatus according to either of Claims 1 or 4, preferably according to Claim 4, wherein the material (12) for thermal insulation of the covering unit (6) or the thermal insulation layer is connected to the covering unit (6), preferably by a positive-fit or atomic-level connection, particularly preferably by a positive-fit connection such that an insulation chamber (13) between the material (12) and the inner wall (7) of the covering unit (6) is formed, wherein the insulation chamber (13) is preferably exclusively filled with air.

6. Distributor apparatus according to either of Claims 1 or 4, wherein a distance in the range from 0.1 to 100 mm, preferably in the range from 0.5 to 10 mm, particularly preferably in the range from 1 to 5 mm, is present between the one inner wall (7) of the covering unit (6) and the material (12) for thermal insulation of the covering unit (6) at least in regions, preferably along the entire outer surface (14) of the inner wall (7) of the covering unit (6).

7. Distributor apparatus according to any of Claims 1 or 4 to 5, wherein the material (12) for thermal insulation is in the form of a coating on the inner wall (7) of the covering unit (6).

8. Distributor apparatus according to any of the preceding claims, wherein the material (12) for thermal insulation of the covering unit (6) is a material selected from the following group or the covering unit (6) is composed of a material selected from the following group:
wood, one or more further thermosets, rubber, ceramics, foams,
wherein the material (12) is preferably selected from the group consisting of wood, rubber, ceramics, foams.

9. Process for introducing compressed air and/or sealant into a pneumatic vehicle tire comprising the steps of:
A) providing a tire repair kit comprising a compressor and a distributor apparatus (1) according to any of the preceding claims and a pneumatic vehicle tire having a puncture for use of the tire repair kit,
B) connecting a sealant transport channel (4) to the pneumatic vehicle tire having the puncture,
C) use of the tire repair kit to increase the tire internal pressure of the pneumatic vehicle tire having the puncture to a minimum pressure, preferably to at least 1 bar, wherein compressed air from the compressor is pumped into the pneumatic vehicle tire,
D) interrupting the connection between the pneumatic vehicle tire having an elevated tire internal pressure and the sealant transport channel (4),
E) removing the covering unit (6) from the distributor apparatus (1) and connecting a sealant container comprising sealant to the distributor apparatus (1) without the removed covering unit (6),
F) connecting the pneumatic vehicle tire having elevated tire internal pressure and the sealant transport channel (4) and conveying sealant from the sealant container into the pneumatic vehicle tire using the compressed air from the compressor,
G) sealing the puncture in the pneumatic vehicle tire using the sealant conveyed into the pneumatic vehicle tire.

10. Use of a covering unit (6) as defined in any of Claims 1 to 8 for diverting a compressed air stream from a compressed air transport channel (5) into a sealant transport channel (4) and/or a covering unit (6) as in any of the preceding Claims 1 or 4 to 8 for thermal insulation.

## Revendications

1. Dispositif de distribution pour introduire de l'air comprimé et/ou un agent d'étanchéité dans un pneumatique de véhicule, le dispositif de distribution (1) présentant
- au moins un raccord de gaz (2) destiné à être raccordé à au moins une source d'air comprimé,
- au moins un raccord d'agent d'étanchéité (3) destiné à être raccordé à au moins un contenant d'agent d'étanchéité,
et
- au moins deux canaux, un canal étant un canal de transport d'agent d'étanchéité (4) pour transporter de l'air comprimé et/ou de l'agent d'étanchéité dans un pneumatique de véhicule et un deuxième canal étant un canal de transport d'air comprimé (5) pour transporter de l'air comprimé vers le raccord d'agent d'étanchéité (3) ou vers le premier canal,
une unité de recouvrement (6) présentant au moins une paroi intérieure (7) étant mise en place sur le raccord d'agent d'étanchéité (3) pour fermer le raccord d'agent d'étanchéité (3) et l'extrémité côté distributeur (8) du canal de transport d'air comprimé (5) étant agencée de telle sorte que l'air comprimé provenant du raccord de gaz (2) est guidé en direction de la paroi intérieure (7) de l'unité de recouvrement (6),
le dispositif de distribution (1) présentant, entre la paroi intérieure (7) de l'unité de recouvrement (6) et ladite extrémité côté distributeur (8) du canal de transport d'air comprimé (5), un matériau (12) pour l'isolation thermique de l'unité de recouvrement (6),
le matériau (12) pour l'isolation thermique de l'unité de recouvrement (6) étant configuré sous la forme d'une couche d'isolation thermique, **caractérisé en ce que** le matériau pour l'isolation thermique de l'unité de recouvrement est conçu pour dévier l'air comprimé provenant du canal de transport d'air comprimé (5) au moins partiellement dans le canal de transport d'agent d'étanchéité (4).

2. Dispositif de distribution selon la revendication 1, dans lequel le raccord d'agent d'étanchéité (3) présente un filetage intérieur (10) et l'unité de recouvrement (6) présente un filetage extérieur (11) adapté au filetage intérieur (10), l'unité de recouvrement (6) étant mise en place au moyen de son filetage extérieur (11) sur le raccord d'agent d'étanchéité (3) avec le filetage intérieur (10).

3. Dispositif de distribution selon l'une quelconque des revendications précédentes, l'unité de recouvrement (6) étant appropriée pour fermer hermétiquement le raccord d'agent d'étanchéité (3) et/ou étant constituée d'un matériau composite, le matériau composite comprenant des composés d'une matrice polymère choisie dans le groupe constitué par les thermodurcissables tels que le polyamide, le téflon, le polyéthylène téréphtalate et un support de résistance tel que des fibres de verre, des fibres métalliques.

4. Dispositif de distribution selon la revendication 1, le matériau (12) pour l'isolation thermique de l'unité de recouvrement (6) étant configuré sous la forme d'une couche d'isolation thermique et étant conçu pour dévier complètement l'air comprimé provenant du canal de transport d'air comprimé (5) dans le canal de transport d'agent d'étanchéité (4).

5. Dispositif de distribution selon l'une quelconque des revendications 1 ou 4, de préférence selon la revendication 4, le matériau (12) pour l'isolation thermique de l'unité de recouvrement (6) ou la couche d'isolation thermique étant relié(e) à l'unité de recouvrement (6), de préférence étant relié(e) par complémentarité de forme ou par liaison de matière, de manière particulièrement préférée étant relié(e) par complémentarité de forme de telle sorte qu'une chambre d'isolation (13) est formée entre le matériau (12) et la paroi intérieure (7) de l'unité de recouvrement (6), la chambre d'isolation (13) étant de préférence remplie exclusivement d'air.

6. Dispositif de distribution selon l'une quelconque des revendications 1 ou 4, il existant entre l'une des parois intérieures (7) de l'unité de recouvrement (6) et le matériau (12) pour l'isolation thermique de l'unité de recouvrement (6), au moins par zones, de préférence le long de toute la surface extérieure (14) de la paroi intérieure (7) de l'unité de recouvrement (6), une distance dans la plage de 0,1 à 100 mm, de préférence dans la plage de 0,5 à 10 mm, de manière particulièrement préférée dans la plage de 1 à 5 mm.

7. Dispositif de distribution selon l'une quelconque des revendications 1 ou 4 à 5, le matériau (12) pour l'isolation thermique se présentant sous forme de revêtement sur la paroi intérieure (7) de l'unité de recouvrement (6).

8. Dispositif de distribution selon l'une quelconque des revendications précédentes, le matériau (12) pour l'isolation thermique de l'unité de recouvrement (6) étant un matériau choisi dans le groupe suivant ou l'unité de recouvrement (6) étant constituée d'un matériau choisi dans le groupe suivant :
bois, un ou plusieurs autres thermodurcissables, caoutchouc, céramiques, mousses,
le matériau (12) étant de préférence choisi dans le groupe constitué par le bois, le caoutchouc, les céramiques, les mousses.

9. Procédé d'introduction d'air comprimé et/ou d'agent d'étanchéité dans un pneumatique de véhicule, comprenant les étapes suivantes :
A) la fourniture d'un kit de réparation de pneu avec un compresseur et un dispositif de distribution (1) selon l'une quelconque des revendications précédentes, et d'un pneumatique de véhicule ayant une crevaison pour l'utilisation du kit de réparation de pneu,
B) la liaison d'un canal de transport d'agent d'étanchéité (4) au pneumatique de véhicule ayant la crevaison,
C) l'utilisation du kit de réparation de pneu pour augmenter la pression interne de pneu du pneumatique de véhicule ayant la crevaison jusqu'à une pression minimale, de préférence au moins 1 bar, de l'air comprimé étant pompé du compresseur dans le pneumatique de véhicule,
D) l'interruption de la liaison entre le pneumatique de véhicule avec la pression interne de pneu augmentée et le canal de transport d'agent d'étanchéité (4),
E) le retrait de l'unité de recouvrement (6) du dispositif de distribution (1) et la mise en place d'un contenant d'agent d'étanchéité avec de l'agent d'étanchéité sur le dispositif de distribution (1) sans l'unité de recouvrement (6) retirée,
F) la liaison du pneumatique de véhicule avec la pression interne de pneu augmentée et du canal de transport de produit d'étanchéité (4) et l'acheminement d'agent d'étanchéité du contenant d'agent d'étanchéité dans le pneumatique de véhicule au moyen de l'air comprimé provenant du compresseur,
G) le colmatage de la crevaison du pneumatique de véhicule au moyen de l'agent d'étanchéité acheminé dans le pneumatique de véhicule.

10. Utilisation d'une unité de recouvrement (6) telle que définie dans l'une quelconque des revendications 1 à 8 pour dévier un courant d'air comprimé d'un canal de transport d'air comprimé (5) vers un canal de transport d'agent d'étanchéité (4) et/ou d'une unité de recouvrement (6) telle que définie dans l'une quelconque des revendications 1 ou 4 à 8 précédentes pour l'isolation thermique.
